# EUROPÄISCHE PATENTSCHRIFT

(11) **EP 3 803 439 B1**
(45) Veröffentlichungstag und Bekanntmachung des Hinweises auf die Patenterteilung: **02.07.2025**
(21) Anmeldenummer: 19719793.2
(22) Anmeldetag: 17.04.2019
(51) Int. Cl.: G01S 5/02, G01S 5/14, G07C 9/00

(54) **VERFAHREN UND ANORDNUNG ZUM BESTIMMEN EINES AUFENTHALTSBEREICHS EINER FUNKVORRICHTUNG, UND FAHRZEUG MIT EINER SOLCHEN ANORDNUNG**
METHOD AND ARRANGEMENT FOR DETERMINING AN OCCUPIED REGION OF A RADIO DEVICE, AND VEHICLE HAVING SUCH AN ARRANGEMENT
PROCÉDÉ ET ENSEMBLE SERVANT À DÉFINIR UNE ZONE DE SÉJOUR D'UN DISPOSITIF RADIO, ET VÉHICULE COMPRENANT UN ENSEMBLE DE CE TYPE

(30) Priorität: 11.06.2018 DE 102018209258
(43) Veröffentlichungstag der Anmeldung: 14.04.2021
(73) Patentinhaber: Bayerische Motoren Werke Aktiengesellschaft, 80809 München (DE)
(72) Erfinder: KREBS, Alexander, 80636 München (DE); KNOBLOCH, Daniel, 80637 München (DE)
(86) Internationale Anmeldenummer: PCT/EP2019/059973
(87) Internationale Veröffentlichungsnummer: WO 2019/238302

(56) Entgegenhaltungen:
- WO-A1-97/27711
- WO-A2-2014/047352
- DE-A1- 102015 208 621
- JP-A- 2017 118 485
- US-A1- 2014 274 018
- US-A1- 2015 338 502
- US-A1- 2017 188 326
- US-A1- 2018 053 416
- US-B2- 6 947 729

## Beschreibung

Die vorliegende Erfindung betrifft ein Verfahren und eine Anordnung zum Bestimmen eines Aufenthaltsbereichs einer Funkvorrichtung, und ein Fahrzeug mit einer solchen Anordnung, insbesondere ein Kraftfahrzeug.

Aus dem Stand der Technik sind bereits eine Reihe von Verfahren und Systemen zur Positionsbestimmung von Funksendern bekannt. Diese basieren zumeist auf rauschbehafteten Entfernungsschätzungen zwischen dem Funksender an einer unbekannten Position und mehreren Funksendern mit bekannten Positionen (in der vorliegenden Anmeldung auch "Anker" genannt) mittels Laufzeitmessung, Feldstärkemessung und Einfallswinkelmessung von Signalen zwischen dem Funksender an der unbekannten Position (in der vorliegenden Anmeldung auch einfach "Funksender" genannt) und den Ankern, oder einer Kombination aus diesen. Zur Bestimmung, ob sich der Funksender in einem definierten Aufenthaltsbereich befindet, kann die Position des Funksenders aus Messdaten, die durch die zuvor genannten Techniken bestimmt werden, mittels analytischer Verfahren (z.B. Tri- oder Multilateration bei drei oder mehr Ankern, Kalman-Filtern bei sich bewegenden Funksendern) oder stochastischer Verfahren zur Bestimmung der Aufenthaltswahrscheinlichkeitsverteilung (praktische Implementierung z.B. mittels Partikelfilter) geschätzt werden. Alternativ kann aufgrund der Messwerte eine direkte Klassifikation in Aufenthaltsbereiche vorgenommen werden (z.B. Machine-Learning mit Klassifikatormodell und Trainingsdaten). Als Stand der Technik sind beispielsweise die DE 10 2015 208621 A1, WO2018/036761 A1 und DE 10 2015 209755 A1 zu nennen.

Die Erfinder der vorliegenden Erfindung haben erkannt, dass die Genauigkeit bzw. Zuverlässigkeit aller zuvor genannten Verfahren und der daraus folgenden Zonenklassifikation abhängig von der Rauschleistung der von den Ankern bereitgestellten Messwerte ist. In keinem der zuvor genannten Verfahren kann eine sichere, endgültige Entscheidung bezüglich des Aufenthaltsortes des Funksenders getroffen werden. Weiterhin benötigen die zuvor genannten Verfahren eine Mindestanzahl von drei Ankern zur Berechnung der Funksenderposition.

WO 97/27711 A1 offenbart ein Verfahren zur Ortsbestimmung einer mobilen Kommunikationseinheit in einem "digital time division mobile communication network".

WO 2014/047352 A2 offenbart ein Verfahren zur Ortsbestimmung einer mobilen Kommunikationseinheit in einem mobilen Kommunikationsnetz.

US 2014/0274018 A1 offenbart eine Vorrichtung zum Begrenzen von Funktionen eines Mobiltelefons in Abhängigkeit von dessen Aufenthaltsort in einem Fahrzeug.

JP 2017-118485 A offenbart ein fahrzeugbasiertes System zum Ermitteln von Informationen über Insassen des Fahrzeugs.

US 2018/0053416 A1 offenbart einen fahrzeugbasiertes Benutzeridentifikationssystem zum Ermitteln, ob sich ein dem Fahrzeug zugeordnetes tragbares Gerät in der Nähe des Fahrzeugs befindet.

US 2017/0188326 A1 offenbart ein Verfahren zur Ortsbestimmung einer mobilen Kommunikationseinheit in einem mobilen Kommunikationsnetz.

US 6,947,729 B2 offenbart ein Verfahren zur Positionsbestimmung eines mobilen Kommunikationsterminals.

US 2015/0338502 A1 offenbart ein weiteres Verfahren zur Positionsbestimmung eines mobilen Kommunikationsterminals.

Vor diesem Hintergrund ist es Aufgabe der vorliegenden Erfindung, ein alternatives, insbesondere verbessertes, Verfahren und eine alternative, insbesondere verbesserte, Anordnung zum Bestimmen eines Aufenthaltsbereichs einer Funkvorrichtung bereitzustellen. Eine weitere Aufgabe der vorliegenden Erfindung ist es, ein Fahrzeug mit einer solchen Anordnung bereitzustellen.

Merkmale und Vorteile der vorliegenden Erfindung werden im Folgenden vorwiegend anhand einer bestimmten Anwendung erklärt. In dieser Anwendung wird festgestellt, ob sich ein Funksender, der die Funktion eines traditionellen Autoschlüssels übernimmt, in einem Fahrzeuginneren befindet. Die Erfinder haben erkannt, dass es insbesondere in einer solchen Anwendung aus sicherheitstechnischen Überlegungen wichtig ist, dass mit nahezu 100%iger Sicherheit festgestellt werden kann, ob sich der Funksender im Fahrzeuginneren befindet oder nicht. In ihrer breitesten Form ist die Erfindung aber nicht auf eine solche Anwendung eingeschränkt.

Eine oder mehrere der oben genannten Aufgaben werden erfindungsgemäß durch ein Verfahren, eine Anordnung und ein Fahrzeug gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erster Aspekt der Erfindung betrifft ein Verfahren nach Anspruch 1 zum Bestimmen eines Aufenthaltsbereichs einer ersten Funkvorrichtung.

Durch ein solches Verfahren, das basierend auf einer Laufzeit, insbesondere basierend nur auf einer Laufzeit des Signals, einen jeweiligen Umgebungsbereich um die weiteren Funkvorrichtungen bestimmt, in dem sich die erste Funkvorrichtung befindet, kann das Verfahren mit größerer Sicherheit als im Stand der Technik den Aufenthaltsbereich der ersten Funkvorrichtung bestimmen. Die Erfindung beruht unter anderem auf der Erkenntnis, dass die kürzeste Signallaufzeit zwischen der ersten Funkvorrichtung und einer weiteren Funkvorrichtung (Anker) einseitig durch die physikalische Konstante der Lichtgeschwindigkeit begrenzt ist. Aus jeder Messung der Laufzeit bezüglich eines Ankers resultiert darauf im Umkehrschluss ein physikalisch beweisbarer, maximaler Abstand zwischen dem jeweiligen Anker und der ersten Funkvorrichtung. Durch die (geometrische) Überlagerung von zwei oder mehr dieser Umgebungsbereiche entsteht ein Überschneidungsbereich, dessen Außenseiten einen konvexen geometrischen Körper bilden. Erfindungsgemäß lässt sich dann schließen, dass sich die erste Funkvorrichtung innerhalb dieses konvexen Körpers befindet. Der konvexe Körper kann also als Aufenthaltsbereich der ersten Funkvorrichtung angesehen werden, oder ein Aufenthaltsbereich der ersten Funkvorrichtung kann aus diesem bestimmt werden, wie im Zusammenhang mit manchen Ausführungsformen nachfolgend beschrieben wird.

Ein zweiter Aspekt der Erfindung betrifft ein Verfahren nach Anspruch 2 zum Bestimmen eines Aufenthaltsbereichs einer ersten Funkvorrichtung.

Dieser zweite Aspekt ist dem ersten Aspekt sehr ähnlich, jedoch werden bei dem zweiten Aspekt Signale von den wenigstens zwei weiteren Funkvorrichtungen (Ankern) ausgesandt und durch die erste Funkvorrichtung empfangen. Das Bestimmen der Umgebungsbereiche um die weiteren Funkvorrichtungen und das Bestimmen des Aufenthaltsbereichs der ersten Funkvorrichtung kann im Prinzip analog dem ersten Aspekt erfolgen.

Gemäß einer bevorzugten Ausführungsform ist bei dem Bestimmen eines jeden Umgebungsbereichs im Wesentlichen vollständig sichergestellt, dass sich die erste Funkvorrichtung tatsächlich in dem jeweiligen Umgebungsbereich befindet, wobei das Bestimmen der Umgebungsbereiche vorzugsweise dem entspricht, was in der task group IEEE 802.15.4z standardisiert wird. Die entsprechenden Dokumente können unter der folgenden Internet-Adresse abgerufen werden: https://men-tor.ieee.org/802.15/documents ?is_group=004z

Diese und weitere Ausführungsformen finden sowohl in Verbindung mit dem ersten als auch mit dem zweiten Aspekt der Erfindung Anwendung.

Gemäß dieser Ausführungsform kommen also Verfahrensschritte zur Anwendung, nach deren Ausführung man sich (fast) absolut sicher sein kann, dass sich die erste Funkvorrichtung innerhalb eines jeden Umgebungsbereichs befindet. Mit entsprechender Sicherheit kann daraus der Überschneidungsbereich und somit der Aufenthaltsbereich der ersten Funkvorrichtung bestimmt werden.

Beispielsweise durch die Benutzung von Funkvorrichtungen, die (bzw. deren Funktionsweise) dem entspricht, was in der task group IEEE 802.15.4z standardisiert wird, kann eine entsprechende Sicherheit erreicht werden.

Mit den Begriffen "im Wesentlichen vollständig sichergestellt", "(fast) absolute Sicherheit" etc. ist vorzugsweise gemeint, dass die Umgebungsbereiche normalerweise immer korrekt bestimmt werden, mit nur äußerst wenigen Ausnahmen. Insbesondere könnten solche Ausnahmen nur auf Fehlfunktionen zurückzuführen sein, die sich aber im Rahmen der technischen Möglichkeiten minimieren lassen. Die Zuverlässigkeit der Bestimmung der Umgebungsbereiche hängt jedenfalls insbesondere nicht von der Signalleistung oder der Rauschleistung ab und es ist somit zu erwarten, dass eine größere Zuverlässigkeit als nach bereits bekannten Ansätzen erreicht werden kann.

Mit einer zunehmenden Rauschleistung, insbesondere im Verhältnis zu der Signalleistung, werden die Umgebungsbereiche nach Ausführungsformen der Erfindung allerdings größer, was im Allgemeinen bedeutet, dass auch der Überschneidungsbereich bzw. der erfindungsgemäß bestimmte Aufenthaltsbereich der ersten Funkvorrichtung größer wird. Die Zuverlässigkeit des Verfahrens wird dadurch allerdings nicht beeinträchtigt, d.h. nach dem Durchführen des erfindungsgemäßen Verfahrens kann weiterhin mit (fast) absoluter Sicherheit davon ausgegangen werden, dass sich die erste Funkvorrichtung tatsächlich in dem erfindungsgemäß bestimmten Aufenthaltsbereich befindet. Dieser ist bei rauschbehafteten Signalen lediglich größer als bei rauscharmen Signalen.

Gemäß einer ersten Variante der Erfindung weist das Bestimmen des Aufenthaltsbereichs der ersten Funkvorrichtung basierend auf dem Überschneidungsbereich ein Bestimmen einer Umkugel auf, insbesondere einer minimalen Umkugel des Überschneidungsbereichs, wobei insbesondere diese Umkugel als Aufenthaltsbereich der ersten Funkvorrichtung verwendet wird.

Durch das Bestimmen einer Umkugel basierend auf dem Überschneidungsbereich (der, wie oben beschrieben, normalerweise die Form eines konvexen Körpers annimmt) kann sich ein nachfolgender Vergleich mit einem definierten Bereich vereinfachen. Insbesondere ist das Bestimmen einer Umkugel in mathematischer Hinsicht relativ einfach und kann daher schnell ausgeführt werden. Alternativ (aber außerhalb des Schutzbereichs der Ansprüche) könnten andere geometrische Körper, wie zum Beispiel ein Quader, Würfel, Oktaeder oder ähnliches, basierend auf dem Überschneidungsbereich bestimmt werden, wobei der so bestimmte geometrische Körper den Aufenthaltsbereich der ersten Funkvorrichtung darstellt.

Vorzugsweise wird eine minimale Umkugel bestimmt, weil sich somit auch der erfindungsgemäß bestimmte Aufenthaltsbereich der ersten Funkvorrichtung auf ein kleineres Volumen reduziert, was für einen nachfolgend beschriebenen Vergleich mit einem definierten Bereich von Vorteil ist.

Gemäß einer zweiten Variante der Erfindung, die als Alternative zu dem Bestimmen einer Umkugel anzusehen ist, weist das Bestimmen des Aufenthaltsbereichs der ersten Funkvorrichtung basierend auf dem Überschneidungsbereich das Bestimmen einer Rasterung des Überschneidungsbereichs auf, wobei insbesondere die Gesamtheit von Bereichen, die sich aus der Rasterung ergeben, als Aufenthaltsbereich der ersten Funkvorrichtung verwendet wird.

Eine solche Rasterung ist im Allgemeinen in mathematischer Hinsicht aufwändiger als das Bestimmen einer Umkugel. Allerdings ist das Volumen eines durch Rasterung ermittelten Körpers normalerweise (insbesondere bei der Wahl eines ausreichend kleinen Rasterabstandes) kleiner als das Volumen einer minimalen Umkugel. Erfindungsgemäß wird ermittelt, ob der Aufenthaltsbereichs der ersten Funkvorrichtung vollständig in einem definierten Bereich liegt, insbesondere in einem vordefinierten Bereich.

Nach dieser Ausführungsform kann also mit (fast) absoluter Sicherheit festgestellt werden, ob sich die erste Funkvorrichtung in dem definierten Bereich befindet. Wenn das erfindungsgemäße Verfahren also ergibt, dass der erfindungsgemäß ermittelte Aufenthaltsbereich der ersten Funkvorrichtung vollständig in dem definierten Bereich liegt, kann davon ausgegangen werden, dass sich die erste Funkvorrichtung tatsächlich in dem definierten Bereich befindet. Es ist somit ein positiver Beweis möglich.

Dabei ist zu beachten, dass umgekehrt nicht notwendigerweise geschlossen werden kann, dass sich die erste Funkvorrichtung tatsächlich außerhalb des definierten Bereichs befindet, wenn der erfindungsgemäß ermittelte Aufenthaltsbereich nicht vollständig in dem definierten Bereich liegt. So kann beispielsweise ein Teilbereich der zuvor erwähnten Umkugel außerhalb des definierten Bereichs liegen, obwohl sich die erste Funkvorrichtung in einem anderen Teilbereich der Umkugel befindet, der in dem definierten Bereich liegt. Dies beeinträchtigt aber nicht die Zuverlässigkeit im Falle eines positiven Beweises (wenn das Verfahren also ergibt, dass der Aufenthaltsbereich der ersten Funkvorrichtung vollständig in dem definierten Bereich liegt).

Gemäß einer bevorzugten Ausführungsform befinden sich die weiteren Funkvorrichtungen in oder an einem Fahrzeug, insbesondere einem Kraftfahrzeug, und insbesondere sind sie darin oder daran befestigt oder verbaut.

Gemäß dieser Ausführungsform kann der Aufenthaltsbereich der ersten Funkvorrichtung bezüglich des Fahrzeugs bestimmt werden.

Gemäß einer bevorzugten Ausführungsform liegt der oben erwähnte definierte, insbesondere vordefinierte Bereich im Wesentlichen innerhalb eines Volumens des Fahrzeugs, insbesondere des Kraftfahrzeugs.

So kann also festgestellt werden, ob sich die erste Funkvorrichtung innerhalb des Fahrzeugs befindet. Dies ist insbesondere für die eingangs erwähnte Anwendung nützlich, bei der festgestellt werden soll, ob sich ein bestimmter Funksender ("Autoschlüssel") innerhalb des entsprechenden Fahrzeugs befindet. Ist dies der Fall, kann z.B. das Starten des Motors des Fahrzeugs freigegeben werden. Wird nicht positiv festgestellt, dass sich der Autoschlüssel innerhalb des Fahrzeugs befindet, kann das Starten des Motors verhindert werden.

Ein dritter Aspekt der Erfindung betrifft eine Anordnung nach Anspruch 8 zum Bestimmen eines Aufenthaltsbereichs einer Funkvorrichtung.

Die Anordnung gemäß dem dritten Aspekt entspricht im Wesentlichen dem Verfahren gemäß dem ersten Aspekt, auf dessen Vorteile hier verwiesen wird.

Ein vierter Aspekt der Erfindung betrifft eine Anordnung nach Anspruch 9 zum Bestimmen eines Aufenthaltsbereichs einer ersten Funkvorrichtung.

Die Anordnung gemäß dem vierten Aspekt entspricht im Wesentlichen dem Verfahren gemäß dem zweiten Aspekt, auf dessen Vorteile hier verwiesen wird.

Ein fünfter Aspekt betrifft ein Fahrzeug, insbesondere ein Kraftfahrzeug, das eine der oben beschriebenen Anordnungen aufweist.

Die mit Bezug auf das Verfahren vorgestellten, vorteilhaften Ausgestaltungen und Ausführungsformen sowie deren Vorteile gelten entsprechend auch für die erfindungsgemäße Anordnung und das erfindungsgemäße Fahrzeug und umgekehrt. Weitere Merkmale von Ausführungsformen der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, sofern diese Kombinationen ausführbar und sofern die Kombinationen in den Anwendungsbereich der Ansprüche fallen und insbesondere technisch sinnvoll sind.

Die Erfindung wird nun anhand einiger Ausführungsbeispiele sowie unter Bezugnahme auf die beigefügten Zeichnungen näher erläutert, wobei Bauelemente mit gleicher oder ähnlicher Funktion mit denselben Bezugszeichen versehen sind.

Es zeigen in schematischer Darstellung:
- Fig. 1: ein erstes Ausführungsbeispiel einer erfindungsgemäßen Anordnung von oben,
- Fig. 2: ein zweites Ausführungsbeispiel einer erfindungsgemäßen Anordnung von oben,
- Fig. 3: ein drittes Ausführungsbeispiel einer erfindungsgemäßen Anordnung von oben,
- Fig. 4: ein Ablaufdiagramm mit Verfahrensschritten eines erfindungsgemäßen Verfahrens, und
- Fig. 5: eine Fahrzeugelektronik gemäß einer Ausführungsform.

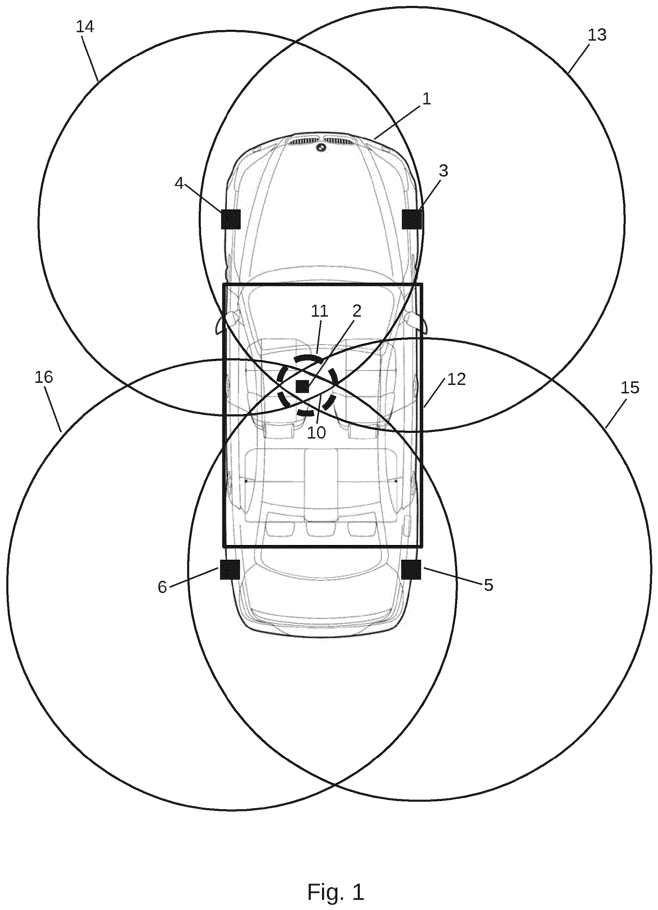

Die in Fig. 1 gezeigte Anordnung weist vier Anker ("weitere Funkvorrichtungen") 3 bis 6 auf, die in diesem Ausführungsbeispiel in oder an dem Fahrzeug 1 befestigt oder verbaut sind. Die Position der vier Anker 3 bis 6 ist in Fig. 1 nur näherungsweise durch schwarze Quadrate dargestellt. Es empfiehlt sich, die Anker 3 bis 6 mit möglichst großem Abstand in der Nähe des Außenumfangs des Fahrzeugs 1 zu verteilen. Im gezeigten Beispiel befindet sich ein Anker 3 rechts in der Nähe der Vorderachse, ein Anker 4 links in der Nähe der Vorderachse, ein Anker 5 rechts in der Nähe der Hinterachse und ein Anker 6 links in der Nähe der Hinterachse. Die Anker 3 bis 6 können beispielsweise in der Fahrzeugkarosserie oberhalb der Räder verbaut sein.

Fig. 1 zeigt auch einen definierten Bereich 12, hier als Rechteck dargestellt, wobei dieser definierte Bereich 12 eigentlich ein dreidimensionaler Körper, zum Beispiel ein Quader, ist. Dieser definierte Bereich ist nicht als solcher sichtbar. Er wird lediglich "definiert" und kann durch den Fahrzeughersteller vorgegeben sein. Beispielsweise kann der definierte Bereich 12 im Wesentlichen dem Fahrzeuginneren oder einem Teilbereich des Fahrzeuginneren entsprechen. Die Definition des Bereichs 12 kann beispielsweise in der Fahrzeugelektronik abgespeichert sein, insbesondere in einem Bordcomputer.

Fig. 1 zeigt auch einen Funksender 2 ("erste Funkvorrichtung"). Dieser kann im Wesentlichen die Funktion eines Autoschlüssels übernehmen. Die Bordelektronik des Fahrzeugs 1 kann nun so programmiert sein, dass das Starten des Motors und/oder andere Fahrzeugfunktionen nur freigegeben werden, wenn positiv bestimmt wird, dass sich der Funksender 2 innerhalb des definierten Bereichs 12 befindet. Anderenfalls (wenn also ein solcher positiver Beweis nicht vorliegt) wird das Starten des Motors bzw. anderer Fahrzeugfunktionen nicht freigegeben.

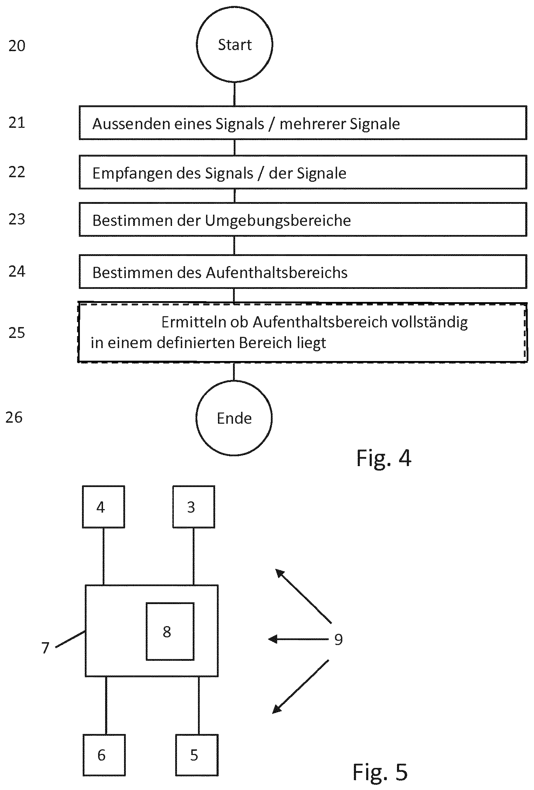

Es wird nun auch auf die Fig. 4, die ein Ablaufdiagramm eines Ausführungsbeispiels eines erfindungsgemäßen Verfahrens darstellt, als auch auf die Fig. 5, die einen Teil der Fahrzeugelektronik des in Fig. 1 gezeigten Fahrzeugs 1 darstellt, Bezug genommen. Die in Fig. 5 gezeigte Fahrzeugelektronik 9 weist einen Bordcomputer 7 mit einem Prozessor 8 auf. Die Anker 3 bis 6 sind auch Teil der Fahrzeugelektronik 9. Diese sind mit dem Bordcomputer 7 verbunden.

Nach dem Start 20 des in Fig. 4 gezeigten Verfahrens wird in einem Schritt 21 ein Signal von dem Funksender 2 ausgesandt. Dieses Signal kann in geeigneter Weise codiert sein, so dass das Signal durch die Codierung dem Funksender 2 zugeordnet werden kann. Das Signal breitet sich nach dem Aussenden mit Lichtgeschwindigkeit aus und wird in einem Schritt 22 durch die Anker 3 bis 6 empfangen. Aufgrund der Entfernung zwischen dem Funksender 2 und den einzelnen Ankern 3 bis 6 findet das Empfangen des Signals bei den entsprechenden Ankern 3 bis 6 nicht unbedingt zeitgleich statt.

Insbesondere basierend auf einer geeigneten Synchronisation zwischen dem Funksender 2 und den Ankern 3 bis 6 kann die Laufzeit des Signals von dem Funksender 2 zu den Ankern 3 bis 6 ermittelt werden. Dies kann beispielsweise durch den in Fig. 5 gezeigten Prozessor 8, der entsprechende Signale/Informationen von den Ankern 3 bis 6 erhält, ausgeführt werden.

Basierend auf den ermittelten Laufzeiten wird nun in einem Schritt 23 jeweils ein Umgebungsbereich um jeden Anker bestimmt. Auch dies kann durch den Prozessor 8 ausgeführt werden. Die Umgebungsbereiche, die jeweils den Ankern 3 bis 6 zugeordnet sind, sind in Fig. 1 durch Kreise 13 bis 16 dargestellt. Dabei handelt es sich eigentlich um Kugeln, in deren Mittelpunkt der jeweilige Anker zu finden ist. In dieser Ausführungsform wird für das Bestimmen der Umgebungsbereiche ein Verfahren/Protokoll verwendet, das die Umgebungsbereiche so bestimmt, dass es mit (fast) absoluter Sicherheit garantiert ist, dass sich der Funksender 2 tatsächlich in dem entsprechenden Umgebungsbereich 13 bis 16 befindet. Ein solches Verfahren/Protokoll kann beispielsweise entsprechend dem, was in der task group IEEE 802.15.4z standardisiert wird, bereitgestellt werden.

Im Allgemeinen wird das empfangene Signal rauschbehaftet sein. Aufgrund dieses Rauschens lässt sich die exakte Position des Funksenders 2 in Bezug auf die Anker 3 bis 6 nicht exakt bestimmen. Während nach Ansätzen im Stand der Technik eine Position als Aufenthaltsposition des Funksenders 2 in Bezug auf andere Funkvorrichtungen geschätzt wird bzw. eine so ermittelte Position nur mit einer gewissen Wahrscheinlichkeit (p < 1) ausgedrückt werden kann, wirkt sich das Rauschen eines empfangenen Signals gemäß diesem Ausführungsbeispiel dahingehend aus, dass der Prozessor 8 die Umgebungsbereiche ausreichend groß ermittelt, so dass mit im Wesentlichen 100%iger Wahrscheinlichkeit sichergestellt ist, dass sich der Funksender 2 tatsächlich in den jeweiligen Umgebungsbereichen 13 bis 16 befindet. Mit anderen Worten, je größer das Rauschen, desto größer werden die Umgebungsbereiche 13 bis 16.

Nachdem die Umgebungsbereiche 13 bis 16 bestimmt wurden, wird in einem Schritt 24, der wiederum beispielsweise durch den Prozessor 8 ausgeführt werden kann, ein Aufenthaltsbereich des Funksenders 2 bestimmt. Dies geschieht aufgrund der Überlegung, dass sich der Funksender 2 in einem Überschneidungsbereich 10 der Umgebungsbereiche 13 bis 16 befinden muss. Der Überschneidungsbereich 10 (in Fig. 1 näherungsweise als Raute dargestellt, in Wirklichkeit aber ein dreidimensionaler Körper) könnte nun exakt bestimmt und als Aufenthaltsbereich verwendet werden, was aber hinsichtlich des Rechenaufwands für viele Anwendungen zu aufwändig und auch nicht notwendig wäre. Stattdessen wird gemäß Ausführungsform der Erfindung eine Umkugel 11 bestimmt, also eine Kugel, die den Überschneidungsbereich 10 komplett umschließt. Vorzugsweise wird zu diesem Zweck eine minimale Umkugel, also eine kleinstmögliche Umkugel, 11 bestimmt.

Die so ermittelte Umkugel 11 stellt nun den Aufenthaltsbereich des Funksenders 2 dar, d.h. erfindungsgemäß kann mit (fast) absoluter Sicherheit davon ausgegangen werden, dass sich der Funksender 2 innerhalb der Umkugel 11 befindet.

Es wird aber wenigstens noch ein weiterer Schritt 25 durchgeführt, nämlich ein Vergleich des Aufenthaltsbereichs bzw. der Umkugel 11 des Funksenders 2 mit einem (vorher) definierten Bereich 12. Hierzu wird ermittelt, ob die Umkugel 11 vollständig in dem definierten Bereich 12 liegt. Ist dies der Fall, liegt sozusagen ein positiver Beweis dafür vor, dass sich der Funksender 2 ("Autoschlüssel") im Fahrzeuginneren befindet. Liegt die Umkugel 11 nicht vollständig innerhalb des definierten Bereichs 12, liegt ein solcher positiver Beweis nicht vor, und entsprechend kann beispielsweise das Starten des Motors des Fahrzeugs 1 oder andere Fahrzeugfunktionen nicht freigegeben werden.

Es werden nun verschiedene Varianten des obigen Ausführungsbeispiels angedeutet, wobei im Wesentlichen nur die Unterschiede zum obigen Ausführungsbeispiel diskutiert werden.

Variante 1: Anstatt eine Umkugel 11 basierend aus dem Überschneidungsbereich 10 zu bestimmen, wird nach dieser Variante der Überschneidungsbereich 10 gerastert, d.h. in kleinere, insbesondere regelmäßige, Abschnitte aufgeteilt. Die Rasterelemente können beispielsweise die Form von Würfeln oder Quadern annehmen, obwohl im Prinzip auch andere geometrische Körper möglich sind. Als Aufenthaltsbereich des Funksenders 2 kann dann die Gesamtheit aller Rasterelemente angesehen werden. Im Schritt 25 würde dann verglichen, ob das gesamte Volumen aller Rasterelemente innerhalb des definierten Bereichs 12 liegt.

Es ist zu erwarten, dass eine solche Rasterung in mathematischer Hinsicht aufwändiger ist als das Bestimmen einer Umkugel 11. Durch die Wahl des Rasterabstandes kann der Rechenaufwand beeinflusst werden (je kleiner der Rasterabstand, desto mehr Rechenaufwand).

Variante 2: Diese Variante ist als Kombination des oben beschriebenen Ausführungsbeispiels mit der ersten Variante anzusehen. Nach Variante 2 kann zunächst die Umkugel 11 bestimmt werden und ermittelt werden, ob sich die Umkugel 11 vollständig in dem definierten Bereich 12 befindet. Ist dies der Fall, ist der positive Beweis erbracht, dass sich der Funksender 2 innerhalb des definierten Bereichs 12 befindet. Falls ermittelt wird, dass die Umkugel 11 nicht vollständig innerhalb des definierten Bereichs 12 liegt, wird die Rasterung gemäß der ersten Variante durchgeführt. Unter Umständen kann dies dazu führen, dass der positive Beweis doch erbracht werden kann. Dies stellt keinen Widerspruch dar. Schließlich ist die Umkugel 11 im Allgemeinen größer als das Gesamtvolumen der Rasterelemente, so dass Teile der Umkugel 11 außerhalb des definierten Bereichs 12 liegen könnten, obwohl der gerasterte Überschneidungsbereich vollständig innerhalb des definierten Bereichs 12 liegt. Ein solcher Fall könnte beispielsweise vorliegen, wenn der Funksender 2 nahe dem vorderen oder hinteren Rand des definierten Bereichs 12 liegt. Wie aus Fig. 1 ersichtlich ist, könnte dann der vordere bzw. hintere Teil der Umkugel 11 außerhalb des definierten Bereichs 12 liegen, obwohl der gerasterte Bereich 10 vollständig innerhalb des definierten Bereichs 12 liegen würde.

Variante 3: Nach dieser Variante sendet der Funksender 2 mehrere Signale aus, beispielsweise ein Signal pro Anker. Die Signale könnten sich durch eine entsprechende Codierung unterscheiden und wären dann beispielsweise nur für einen entsprechenden Anker detektierbar.

Variante 4: Teile des Verfahrens, beispielsweise das Bestimmen der Laufzeit, das Bestimmen der Umgebungsbereiche und/oder des Aufenthaltsbereichs des Funksenders 2 könnten ganz oder teilweise in den Ankern 3 bis 6 stattfinden anstatt in einem (zentralen) Bordcomputer 7. In einem solchen Fall sollten die Anker entsprechend miteinander kommunizieren/verbunden sein.

Variante 5: Während in dem oben beschriebenen Ausführungsbeispiel ein Signal von dem Funksender 2 ausgesandt wird, wird nach dieser Variante jeweils ein Signal von den Ankern ausgesandt und von dem Funksender 2 empfangen. Dieser könnte selbst die Laufzeit der Signale ermitteln oder beispielsweise die Empfangszeitpunkte der Signale zurück an die Anker 3 bis 6 oder den Bordcomputer 7 übermitteln, so dass dort die Laufzeiten ermittelt werden können und die weiteren Berechnungen durchgeführt werden können.

Variante 6: Ein erstes Signal oder mehrere erste Signale könnten von einem oder mehreren Ankern 3 bis 6 ausgesandt werden, und ein zweites Signal würde infolgedessen von dem Funksender 2 ausgesandt und durch die Anker 3 bis 6 empfangen. Zu diesem Zwecke könnte der Funksender 2 als Transponder ausgestaltet sein. Die Umgebungsbereiche 13 bis 16 könnten dann basierend auf der halben Laufzeit der (Hin- und Rück-) Signale ermittelt werden.

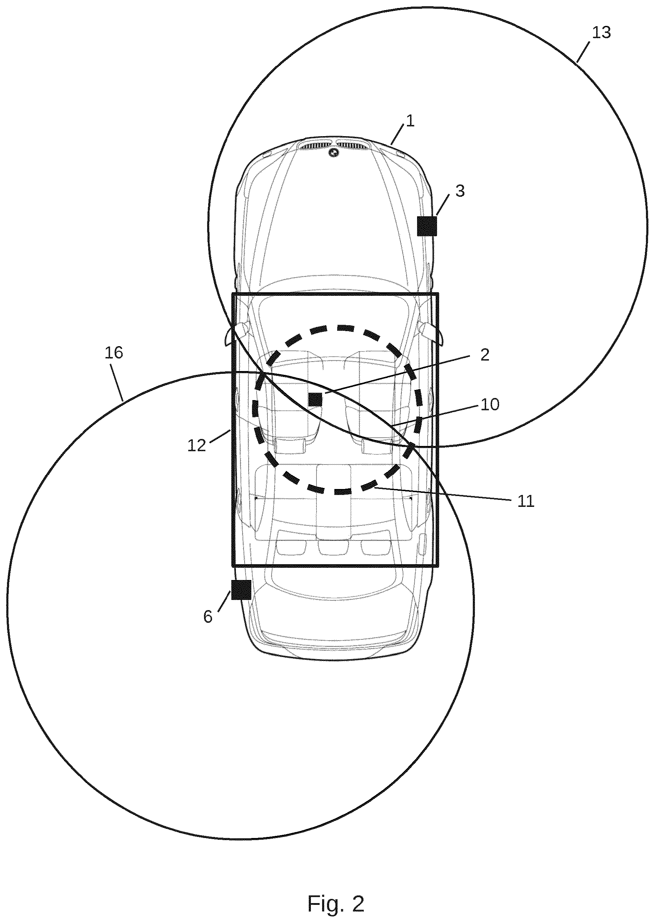

Ein zweites Ausführungsbeispiel ist in Fig. 2 gezeigt. Im Unterschied zum ersten Ausführungsbeispiel sind in dem zweiten Ausführungsbeispiel nur zwei Anker vorhanden, in diesem Beispiel Anker 3 vorne rechts und Anker 6 hinten links. Das Aussenden/Empfangen des Signals/der Signale und das anschließende Bestimmen der Umgebungsbereiche um die Anker und des Aufenthaltsbereichs des Funksenders kann wie in dem ersten Ausführungsbeispiel bzw. den Varianten hierzu erfolgen. Allerdings ist zu erwarten, dass bei der Benutzung von nur zwei Ankern der Überschneidungsbereich 10 größer ist als bei dem ersten Ausführungsbeispiel. Wie in Fig. 2 gezeigt, ist der Überschneidungsbereich 10 ein konvexer (dreidimensionaler) Körper 10, dessen Form als "Doppelschale" oder "UFO" bezeichnet werden könnte. Das Volumen entspricht dem Gesamtvolumen von zwei flachen Schalen, die sich in einer gemeinsamen Kreisfläche berühren.

Entsprechend dem vergrößerten Volumen des Überschneidungsbereichs 10 im zweiten Ausführungsbeispiel gegenüber dem des ersten Ausführungsbeispiels ist auch die Umkugel 11 im zweiten Ausführungsbeispiel größer. Dennoch liegt die gesamte Umkugel 11 des zweiten Ausführungsbeispiels innerhalb des definierten Bereichs 12, so dass auch hier ein positiver Beweis erbracht wird, dass sich der Funksender 2 innerhalb des definierten Bereichs 12 befindet.

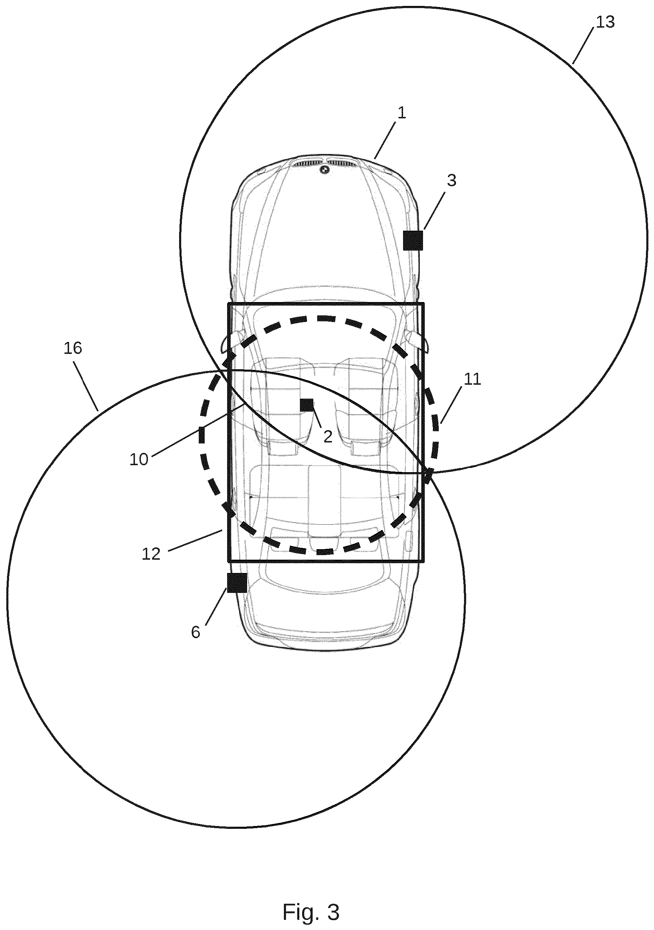

Fig. 3 zeigt schließlich ein drittes Ausführungsbeispiel, wobei die Anordnung im Prinzip die gleiche ist wie im zweiten Ausführungsbeispiel (Fig. 2). Allerdings sind bei dem dritten Ausführungsbeispiel die Umgebungsbereiche 13 und 16 um die Anker 3 und 6 aufgrund einer größeren Rauschleistung größer als die entsprechenden Umgebungsbereiche im zweiten Ausführungsbeispiel. Entsprechend ist der Überschneidungsbereich 10 und auch die Umkugel 11 größer. Wie in Fig. 3 gezeigt ist, befinden sich Teile der Umkugel 11 außerhalb des definierten Bereichs 12, so dass in diesem Fall das erfindungsgemäße Verfahren keinen positiven Beweis liefern kann, dass sich der Funksender 2 innerhalb des definierten Bereichs 12 befindet (obwohl sich tatsächlich der Funksender 2 innerhalb des definierten Bereichs 12 befindet).

Während also auch bei der Benutzung von nur zwei Ankern wie im zweiten und dritten Ausführungsbeispiel ein positiver Beweis möglich ist, ist die Benutzung von drei, vier oder mehr Ankern vorteilhaft.

In allen oben vorgestellten Ausführungsformen und Varianten können Funkvorrichtungen (Funksender 2, Anker 3 bis 6) verwendet werden, deren Reichweite beispielsweise wenige Meter beträgt. Die Erfindung ist in dieser Hinsicht aber nicht eingeschränkt, und die Reichweite der Funkvorrichtungen kann entsprechend der beabsichtigten Anwendung angepasst werden.

Im Zusammenhang mit den oben beschriebenen Ausführungsformen und Varianten kann es natürlich vorkommen, dass sich der Funksender 2 nicht innerhalb des definierte Bereichs 12 oder nicht innerhalb des Fahrzeugs 1 oder noch nicht einmal in der Nähe des Fahrzeugs 1 befindet. In einem solchen Fall würde das Nicht-Empfangen eines entsprechenden Signals dahingehend gewertet werden, dass kein Umgebungsbereich um einen oder mehrere der Anker bestimmt werden kann und dass es entsprechend auch keinen Überschneidungsbereich gibt.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei es sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

Das Dokument WO2014047352 wird als der Stand der Technik angesehen, der dem Aspekt der Erfindung gemäß den Ansprüchen 1 und 8 am nächsten kommt. Es offenbart nicht die Merkmale der Ansprüche 1 und 8, die Umkugel oder die Rasterung zu bestimmen, den Aufenthaltsbereich auf die Umkugel oder die Rasterung zu basieren oder zu bestimmen, ob der Aufenthaltsbereich innerhalb eines bestimmten Bereichs liegt.

Das Dokument US 6 947 729 B2 wird als der Stand der Technik angesehen, der dem Aspekt der Erfindung gemäß den Ansprüchen 2 und 9 am nächsten kommt. Es offenbart nicht die Merkmale der Ansprüche 1 und 8, die Rasterung zu bestimmen, den Aufenthaltsbereich auf die Umkugel oder die Rasterung zu basieren oder zu bestimmen, ob der Aufenthaltsbereich innerhalb eines bestimmten Bereichs liegt.

### BEZUGSZEICHENLISTE

- 1: Fahrzeug
- 2: Funksender/erste Funkvorrichtung
- 3 bis 6: Anker/weitere Funkvorrichtungen
- 7: Bordcomputer
- 8: Prozessor
- 9: Fahrzeugelektronik
- 10: Überschneidungsbereich
- 11: Umkugel
- 12: Definierter Bereich
- 13 bis 16: Umgebungsbereiche
- 20 bis 26: Verfahrensschritte

## Patentansprüche

1. Verfahren zum Bestimmen eines Aufenthaltsbereichs (10, 11) einer ersten Funkvorrichtung (2), wobei das Verfahren aufweist:
- Aussenden eines Signals von der ersten Funkvorrichtung (2),
- Empfangen des Signals durch wenigstens zwei weitere Funkvorrichtungen (3, 4, 5, 6),
- Bestimmen, basierend auf einer Laufzeit des Signals von der ersten Funkvorrichtung (2) zu den weiteren Funkvorrichtungen (3, 4, 5, 6), eines Umgebungsbereichs (13, 14, 15, 16) um jede der weiteren Funkvorrichtungen (3, 4, 5, 6), in dem sich die erste Funkvorrichtung (2) befindet,
- Bestimmen eines Überschneidungsbereichs (10), der sich aus einer Überlagerung aller Umgebungsbereiche (13, 14, 15, 16) ergibt;
- Bestimmen einer Umkugel (11) oder einer Rasterung des Überschneidungsbereichs (10);
- Bestimmen des Aufenthaltsbereichs (10, 11) der ersten Funkvorrichtung (2) basierend auf der Umkugel (11) oder der Rasterung des Überschneidungsbereichs (10); und
- Ermitteln, ob der mittels des Verfahrens bestimmte Aufenthaltsbereich (10, 11) der ersten Funkvorrichtung (2) vollständig in einem definierten Bereich (12) liegt, insbesondere in einem vordefinierten Bereich (12).

2. Verfahren zum Bestimmen eines Aufenthaltsbereichs (10, 11) einer ersten Funkvorrichtung (2), wobei das Verfahren aufweist:
- Aussenden jeweils eines Signals von wenigstens zwei weiteren Funkvorrichtungen (3, 4, 5, 6),
- Empfangen der Signale durch die erste Funkvorrichtung (2),
- Bestimmen, basierend auf einer Laufzeit der Signale von den weiteren Funkvorrichtungen (3, 4, 5, 6) zu der ersten Funkvorrichtung (2), eines Umgebungsbereichs (13, 14, 15, 16) um jede der weiteren Funkvorrichtungen (3, 4, 5, 6), in dem sich die erste Funkvorrichtung (2) befindet,
- Bestimmen eines Überschneidungsbereichs (10), der sich aus einer Überlagerung aller Umgebungsbereiche (13, 14, 15, 16) ergibt;
- Bestimmen einer Umkugel (11) oder einer Rasterung des Überschneidungsbereichs (10);
- Bestimmen des Aufenthaltsbereichs (10, 11) der ersten Funkvorrichtung (2) basierend auf der Umkugel (11) oder der Rasterung des Überschneidungsbereichs (10); und
- Ermitteln, ob der mittels des Verfahrens bestimmte Aufenthaltsbereich (10, 11) der ersten Funkvorrichtung (2) vollständig in einem definierten Bereich (12) liegt, insbesondere in einem vordefinierten Bereich (12).

3. Verfahren nach Anspruch 1 oder 2, **dadurch gekennzeichnet, dass** bei dem Bestimmen eines jeden Umgebungsbereichs (13, 14, 15, 16) im Wesentlichen vollständig sichergestellt ist, dass sich die erste Funkvorrichtung (2) tatsächlich in dem jeweiligen Umgebungsbereich (13, 14, 15, 16) befindet.

4. Verfahren nach einem der Ansprüche 1 bis 3, **dadurch gekennzeichnet, dass** die Umkugel (11), insbesondere eine minimale Umkugel (11), des Überschneidungsbereichs (10) als Aufenthaltsbereich (11) der ersten Funkvorrichtung (2) verwendet wird.

5. Verfahren nach einem der Ansprüche 1 bis 3, **dadurch gekennzeichnet, dass** die Gesamtheit von Bereichen, die sich aus der Rasterung ergeben, als Aufenthaltsbereich (10) der ersten Funkvorrichtung (2) verwendet wird.

6. Verfahren nach einem der vorhergehenden Ansprüche, **dadurch gekennzeichnet, dass** sich die weiteren Funkvorrichtungen (3, 4, 5, 6) in oder an einem Fahrzeug (1), insbesondere einem Kraftfahrzeug (1) befinden, insbesondere darin oder daran befestigt oder verbaut sind.

7. Verfahren nach Anspruch 6, **dadurch gekennzeichnet, dass** der definierte, insbesondere vordefinierte Bereich (12) im Wesentlichen innerhalb eines Volumens des Fahrzeugs (1), insbesondere des Kraftfahrzeugs (1) liegt.

8. Anordnung (9) zum Bestimmen eines Aufenthaltsbereichs (10, 11) einer ersten Funkvorrichtung (2), wobei die Anordnung (9) aufweist:
- wenigstens zwei weitere Funkvorrichtungen (3, 4, 5, 6) zum Empfangen eines Signals von der ersten Funkvorrichtung (2),
- Mittel (8) zum Bestimmen, basierend auf einer Laufzeit des Signals von der ersten Funkvorrichtung (2) zu den weiteren Funkvorrichtungen (3, 4, 5, 6), eines Umgebungsbereichs (13, 14, 15, 16) um jede der weiteren Funkvorrichtungen (3, 4, 5, 6), in dem sich die erste Funkvorrichtung befindet (2),
- Mittel (8) zum Bestimmen eines Überschneidungsbereichs (10), der sich aus einer Überlagerung aller Umgebungsbereiche (13, 14, 15, 16) ergibt;
- Mittel (8) zum Bestimmen einer Umkugel (11) oder einer Rasterung des Überschneidungsbereichs (10);
- Mittel (8) zum Bestimmen des Aufenthaltsbereichs (10, 11) der ersten Funkvorrichtung (2) basierend auf der Umkugel (11) oder der Rasterung des Überschneidungsbereichs (10); und
- Mittel (8) zum Ermitteln, ob der basierend auf der Umkugel (11) oder der Rasterung des Überschneidungsbereichs (10) bestimmte oder zu bestimmende Aufenthaltsbereich (10, 11) der ersten Funkvorrichtung (2) vollständig in einem definierten Bereich (12) liegt, insbesondere in einem vordefinierten Bereich (12).

9. Anordnung (9) zum Bestimmen eines Aufenthaltsbereichs (10, 11) einer ersten Funkvorrichtung (2), wobei die Anordnung (9) aufweist:
- wenigstens zwei weitere Funkvorrichtungen (3, 4, 5, 6) zum Aussenden jeweils eines Signals,
- Mittel (8) zum Bestimmen, basierend auf einer Laufzeit der Signale von den weiteren Funkvorrichtungen (3, 4, 5, 6) zu der ersten Funkvorrichtung (2), eines Umgebungsbereichs (13, 14, 15, 16) um jede der weiteren Funkvorrichtungen (3, 4, 5, 6), in dem sich die erste Funkvorrichtung (2) befindet,
- Mittel (8) zum Bestimmen eines Überschneidungsbereichs (10), der sich aus einer Überlagerung aller Umgebungsbereiche (13, 14, 15, 16) ergibt;
- Mittel (8) zum Bestimmen einer Umkugel (11) oder einer Rasterung des Überschneidungsbereichs (10);
- Mittel (8) zum Bestimmen des Aufenthaltsbereichs (10, 11) der ersten Funkvorrichtung (2) basierend auf der Umkugel (11) oder der Rasterung des Überschneidungsbereichs (10); und
- Mittel (8) zum Ermitteln, ob der basierend auf der Umkugel (11) oder der Rasterung des Überschneidungsbereichs (10) bestimmte oder zu bestimmende Aufenthaltsbereich (10, 11) der ersten Funkvorrichtung (2) vollständig in einem definierten Bereich (12) liegt, insbesondere in einem vordefinierten Bereich (12).

10. Fahrzeug (1), insbesondere Kraftfahrzeug (1), aufweisend eine Anordnung (9) nach Anspruch 8 oder 9.

## Claims

1. Method for determining an area (10, 11) occupied by a first radio apparatus (2), wherein the method comprises:
- emitting a signal from the first radio apparatus (2),
- receiving the signal by means of at least two further radio apparatuses (3, 4, 5, 6),
- determining, on the basis of a propagation time of the signal from the first radio apparatus (2) to the further radio apparatuses (3, 4, 5, 6), a surrounding area (13, 14, 15, 16) around each of the further radio apparatuses (3, 4, 5, 6) in which the first radio apparatus (2) is situated,
- determining an overlapping area (10) which results from a superimposition of all surrounding areas (13, 14, 15, 16);
- determining an outer sphere (11) or a rasterization of the overlapping area (10);
- determining the area (10, 11) occupied by the first radio apparatus (2) on the basis of the outer sphere (11) or the rasterization of the overlapping area (10); and
- determining whether the area (10, 11) occupied by the first radio apparatus (2), as determined by means of the method, is completely in a defined area (12), in particular in a predefined area (12).

2. Method for determining an area (10, 11) occupied by a first radio apparatus (2), wherein the method comprises:
- emitting a respective signal from at least two further radio apparatuses (3, 4, 5, 6),
- receiving the signals by means of the first radio apparatus (2),
- determining, on the basis of a propagation time of the signals from the further radio apparatuses (3, 4, 5, 6) to the first radio apparatus (2), a surrounding area (13, 14, 15, 16) around each of the further radio apparatuses (3, 4, 5, 6) in which the first radio apparatus (2) is situated,
- determining an overlapping area (10) which results from a superimposition of all surrounding areas (13, 14, 15, 16);
- determining an outer sphere (11) or a rasterization of the overlapping area (10);
- determining the area (10, 11) occupied by the first radio apparatus (2) on the basis of the outer sphere (11) or the rasterization of the overlapping area (10); and
- determining whether the area (10, 11) occupied by the first radio apparatus (2), as determined by means of the method, is completely in a defined area (12), in particular in a predefined area (12).

3. Method according to Claim 1 or 2, **characterized in that**, when determining each surrounding area (13, 14, 15, 16), it is substantially completely ensured that the first radio apparatus (2) is actually situated in the respective surrounding area (13, 14, 15, 16).

4. Method according to one of Claims 1 to 3, **characterized in that** the outer sphere (11), in particular a minimum outer sphere (11), of the overlapping area (10) is used as the area (11) occupied by the first radio apparatus (2).

5. Method according to one of Claims 1 to 3, **characterized in that** all areas which result from the rasterization are used as the area (10) occupied by the first radio apparatus (2).

6. Method according to one of the preceding claims, **characterized in that** the further radio apparatuses (3, 4, 5, 6) are situated in or on a vehicle (1), in particular a motor vehicle (1), in particular are fastened or installed in or on the vehicle.

7. Method according to Claim 6, **characterized in that** the defined, in particular predefined, area (12) is substantially within a volume of the vehicle (1), in particular the motor vehicle (1).

8. Arrangement (9) for determining an area (10, 11) occupied by a first radio apparatus (2), wherein the arrangement (9) has:
- at least two further radio apparatuses (3, 4, 5, 6) for receiving a signal from the first radio apparatus (2),
- means (8) for determining, on the basis of a propagation time of the signal from the first radio apparatus (2) to the further radio apparatuses (3, 4, 5, 6), a surrounding area (13, 14, 15, 16) around each of the further radio apparatuses (3, 4, 5, 6) in which the first radio apparatus (2) is situated,
- means (8) for determining an overlapping area (10) which results from a superimposition of all surrounding areas (13, 14, 15, 16);
- means (8) for determining an outer sphere (11) or a rasterization of the overlapping area (10);
- means (8) for determining the area (10, 11) occupied by the first radio apparatus (2) on the basis of the outer sphere (11) or the rasterization of the overlapping area (10); and
- means (8) for determining whether the area (10, 11) occupied by the first radio apparatus (2), as determined or to be determined on the basis of the outer sphere (11) or the rasterization of the overlapping area (10), is completely in a defined area (12), in particular in a predefined area (12).

9. Arrangement (9) for determining an area (10, 11) occupied by a first radio apparatus (2), wherein the arrangement (9) has:
- at least two further radio apparatuses (3, 4, 5, 6) for emitting a respective signal,
- means (8) for determining, on the basis of a propagation time of the signals from the further radio apparatuses (3, 4, 5, 6) to the first radio apparatus (2), a surrounding area (13, 14, 15, 16) around each of the further radio apparatuses (3, 4, 5, 6) in which the first radio apparatus (2) is situated,
- means (8) for determining an overlapping area (10) which results from a superimposition of all surrounding areas (13, 14, 15, 16);
- means (8) for determining an outer sphere (11) or a rasterization of the overlapping area (10);
- means (8) for determining the area (10, 11) occupied by the first radio apparatus (2) on the basis of the outer sphere (11) or the rasterization of the overlapping area (10); and
- means (8) for determining whether the area (10, 11) occupied by the first radio apparatus (2), as determined or to be determined on the basis of the outer sphere (11) or the rasterization of the overlapping area (10), is completely in a defined area (12), in particular in a predefined area (12).

10. Vehicle (1), in particular motor vehicle (1), having an arrangement (9) according to Claim 8 or 9.

## Revendications

1. Procédé pour déterminer une zone de localisation (10, 11) d'un premier dispositif radio (2), le procédé comprenant les étapes suivantes :
- émettre un signal à partir du premier dispositif radio (2),
- recevoir le signal par au moins deux autres dispositifs radio (3, 4, 5, 6),
- déterminer, en se basant sur le temps de propagation du signal provenant du premier dispositif radio (2) vers les autres dispositifs radio (3, 4, 5, 6), une zone environnante (13, 14, 15, 16) autour de chacun des autres dispositifs radio (3, 4, 5, 6) dans laquelle se trouve le premier dispositif radio (2),
- déterminer une zone de chevauchement (10) résultant d'une superposition de toutes les zones environnantes (13, 14, 15, 16) ;
- déterminer une sphère périphérique (11) ou une rastérisation de la zone de chevauchement (10) ;
- déterminer la zone de localisation (10, 11) du premier dispositif radio (2) en se basant sur la sphère périphérique (11) ou sur la rastérisation de la zone de chevauchement (10) ; et
- déterminer si la zone de localisation (10, 11) du premier dispositif radio (2) déterminée au moyen du procédé se trouve entièrement dans une zone définie (12), en particulier dans une zone prédéfinie (12).

2. Procédé pour déterminer une zone de localisation (10, 11) d'un premier dispositif radio (2), le procédé comprenant les étapes suivantes :
- émettre un signal respectif à partir d'au moins deux autres dispositifs radio (3, 4, 5, 6),
- recevoir les signaux par le premier dispositif radio (2),
- déterminer, en se basant sur le temps de propagation des signaux émis par les autres dispositifs radio (3, 4, 5, 6) vers le premier dispositif radio (2), une zone environnante (13, 14, 15, 16) autour de chacun des autres dispositifs radio (3, 4, 5, 6) dans laquelle se trouve le premier dispositif radio (2),
- déterminer une zone de chevauchement (10) résultant d'une superposition de toutes les zones environnantes (13, 14, 15, 16) ;
- déterminer une sphère périphérique (11) ou une rastérisation de la zone de chevauchement (10) ;
- déterminer la zone de localisation (10, 11) du premier dispositif radio (2) en se basant sur la sphère périphérique (11) ou sur la rastérisation de la zone de chevauchement (10) ; et
- déterminer si la zone de localisation (10, 11) du premier dispositif radio (2) déterminée au moyen du procédé se trouve entièrement dans une zone définie (12), en particulier dans une zone prédéfinie (12).

3. Procédé selon la revendication 1 ou la revendication 2, **caractérisé en ce que**, lors de la détermination de chaque zone environnante (13, 14, 15, 16), il est assuré de manière essentiellement totale que le premier dispositif radio (2) se trouve effectivement dans la zone environnante (13, 14, 15, 16) concernée.

4. Procédé selon l'une des revendications 1 à 3, **caractérisé en ce que** la zone de recouvrement (11), en particulier une zone de recouvrement minimale (11), de la zone de chevauchement (10) est utilisée comme zone de localisation (11) du premier dispositif radio (2).

5. Procédé selon l'une des revendications 1 à 3, **caractérisé en ce que** l'ensemble des zones résultant de la rastérisation est utilisé comme zone de localisation (10) du premier dispositif radio (2).

6. Procédé selon l'une des revendications précédentes, **caractérisé en ce que** les autres dispositifs radio (3, 4, 5, 6) se trouvent dans ou sur un véhicule (1), en particulier un véhicule automobile (1), en particulier fixés ou installés dans ou sur celui-ci.

7. Procédé selon la revendication 6, **caractérisé en ce que** la zone définie, en particulier prédéfinie (12), se situe sensiblement à l'intérieur d'un volume du véhicule (1), en particulier du véhicule automobile (1).

8. Agencement (9) pour déterminer une zone de localisation (10, 11) d'un premier dispositif radio (2), l'agencement (9) comprenant :
- au moins deux autres dispositifs radio (3, 4, 5, 6) pour recevoir un signal en provenance du premier dispositif radio (2),
- des moyens (8) pour déterminer, en se basant sur un temps de propagation du signal provenant du premier dispositif radio (2) vers les autres dispositifs radio (3, 4, 5, 6), d'une zone environnante (13, 14, 15, 16) autour de chacun des autres dispositifs radio (3, 4, 5, 6), dans laquelle se trouve le premier dispositif radio (2),
- des moyens (8) pour déterminer une zone de chevauchement (10) résultant d'une superposition de toutes les zones environnantes (13, 14, 15, 16) ;
- des moyens (8) pour déterminer une sphère périphérique (11) ou une rastérisation de la zone de chevauchement (10) ;
- des moyens (8) pour déterminer la zone de localisation (10, 11) du premier dispositif radio (2) en se basant sur la sphère périphérique (11) ou sur la rastérisation de la zone d'intersection (10) ; et
- des moyens (8) pour déterminer si la zone de localisation (10, 11) du premier dispositif radio (2), déterminée ou à déterminer sur la base de la sphère périphérique (11) ou de la rastérisation de la zone de chevauchement (10), se trouve entièrement dans une zone définie (12), en particulier dans une zone prédéfinie (12).

9. Agencement (9) pour déterminer une zone de localisation (10, 11) d'un premier dispositif radio (2), l'agencement (9) comprenant :
- au moins deux autres dispositifs radio (3, 4, 5, 6) pour émettre chacun un signal,
- des moyens (8) pour déterminer, en se basant sur le temps de propagation des signaux émis par les autres dispositifs radio (3, 4, 5, 6) vers le premier dispositif radio (2), d'une zone environnante (13, 14, 15, 16) autour de chacun desdits autres dispositifs radio (3, 4, **5,** 6), dans laquelle se trouve le premier dispositif radio (2),
- des moyens (8) pour déterminer une zone de chevauchement (10) résultant d'une superposition de toutes les zones environnantes (13, 14, 15, 16) ;
- des moyens (8) pour déterminer une sphère périphérique (11) ou une rastérisation de la zone de chevauchement (10) ;
- des moyens (8) pour déterminer la zone de localisation (10, 11) du premier dispositif radio (2) en se basant sur la sphère périphérique (11) ou sur la rastérisation de la zone d'intersection (10) ; et
- des moyens (8) pour déterminer si la zone de localisation (10, 11) du premier dispositif radio (2), déterminée ou à déterminer sur la base de la sphère périphérique (11) ou de la rastérisation de la zone de chevauchement (10), se trouve entièrement dans une zone définie (12), en particulier dans une zone prédéfinie (12) .

10. Véhicule (1), en particulier véhicule automobile (1), comprenant un agencement (9) selon la revendication 8 ou la revendication 9.
